Europäisches Patentamt

European Patent Office

Office européen des brevets

(19)

(11) Veröffentlichungsnummer: **0 206 356**

**A2**

(12) # EUROPÄISCHE PATENTANMELDUNG

(21) Anmeldenummer: **86108838.3**

(22) Anmeldetag: **28.06.86**

(51) Int. Cl.⁴: **F01N 7/00**

(30) Priorität: **28.06.85 DE 3523094**

(43) Veröffentlichungstag der Anmeldung:
**30.12.86 Patentblatt 86/52**

(84) Benannte Vertragsstaaten:
**CH FR GB IT LI SE**

(71) Anmelder: **Daimler Benz Aktiengesellschaft**
**Postfach 600202 Mercedesstrasse 136**
**D-7000 Stuttgart 60(DE)**

(72) Erfinder: **Porth, Dieter, Dipl.-Ing.**
**Im Wolfsgalgen 18**
**D-7141 Schwieberdingen(DE)**
Erfinder: **Scholz, Helmut**
**An der Ziegelei 14**
**D-7551 Bischweier(DE)**
Erfinder: **Unser, Karl-Heinz**
**Am Hohenrain 14**
**D-7553 Muggensturm(DE)**
Erfinder: **Hofer, Hermann, Dipl.-Ing.**
**Goethestrasse 27**
**D-7560 Gaggenau(DE)**

(54) **Druckluftanlage für Nutzfahrzeuge.**

(57) Bei einer Druckluftanlage (23) für Nutzfahrzeuge,
die über einen Verbrennungsmotor (22) angetrieben
werden, werden die Abluftausgänge (a) der Druckluftaggregate auf das Abgasleitung (34) und Auspufftopf (35) umfassende Abgassystem feführt, so daß
dessen Auspufftopf (35) Schalldämpfer und
Entölvorrichtung für die Abluft bildet.

Fig. 2

EP 0 206 356 A2

# Druckluftanlage für Nutzfahrzeuge

Die Erfindung betrifft eine Druckluftanlage für Nutzfahrzeuge, die über einen Verbrennungsmotor angetrieben sind, dessen Abgassystem einen Auspufftopf umfaßt, und bei denen die Druckluftanlage mindestens ein Druckluftaggregat aufweist, das mit einem der Entlüftung dienenden Abluftausgang versehen ist, und mit Mitteln zur Dämpfung der durch die Abluft verursachten Ausströmgeräusche.

Bei solchen Druckluftanlagen werden Verbraucher, wie Arbeitszylinder, über Steuerventile be- und entlüftet. Die Steuerdrücke werden von Druckreglern eingestellt, die zur Aufrechterhaltung von Konstantdrücken von Zeit zu Zeit entlüften. Beim Entlüften dieser Druckluftaggregate entstehen durch die ausströmende Abluft zum Teil erhebliche Geräusche.

Zur Dämpfung dieser Geräusche sind bei einer bekannten Druckluftanlage geräuschdämpfende Mittel vorgesehen, die als Schaldämpfer an den einzelnen Druckluftaggregaten angeordnet sind. Diese Schalldämpfer verlangsamen die Strömungsgeschwindigkeit der Abluft und vermindern damit die Geräusch entwicklung, erhöhen aber den Staudruck im Druckluftaggregat und bewirken eine Verlängerung der Entlüftungszeiten, die mitunter über den gesetzlich vorgeschriebenen Werten liegen. Außerdem wird durch den in der Abluft immer vorhandenen Ölnebel die Umwelt verschmutzt.

Für Schalldämpfer an Luftauslässen von Druckluftaggregaten ist es deshalb auch schon bekannt, diese mit einer Ölabscheidevorrichtung zu kombinieren (DE-OS 30 01 486).

Der Erfindung liegt die Aufgabe zugrunde, bei einer Druckluftanlage der eingangs genannten Art die geräuschdämpfenden Mittel so auszugestalten, daß eine den gesetzlichen Vorschriften entsprechende Geräuschdämpfung bei kurzen Entlüftungszeiten in Verbindung mit einer Vermeidung von Ölnebelausstoß erreicht wird, und zwar ohne aufwendige Zusatzeinrichtungen.

Gemäß der Erfindung wird dies dadurch erreicht, daß der Abluftausgang des Druckluftaggregates auf das Abgassystem ausmündet, derart, daß dessen Auspufftopf Schalldämpfer und Entölvorrichtung für die Abluft bildet. Es wird somit bei der erfindungsgemäßen Lösung das stets vorhandene Auspuffsystem zusätzlich zur Dämpfung der Ausströmgeräusche genutzt, und ebenso zur Entölung der Abluft, wobei der Auspufftopf einen großvolumigen Schalldämpfer bildet. Es hat sich gezeigt, daß unabhängig von der Beaufschlagung des Abgassystemes mit Abgasen der abströmenden Abluft stets nur ein geringer Stau entgegensteht, so daß die aggregatespezifischen Entlüftungszeiten nicht wesentlich beeinträchtigt werden.

Als besonders vorteilhaft erweist es sich, wenn die Abluftzuführung auf das Abgassystem dem Auspufftopf unmittelbar zugeordnet ist, da so dessen volles Volumen sofort zur Verfügung steht und auch eine besonders gute Verbrennung eventueller Ölreste erreicht wird.

In Ausgestaltung der Erfindung ist es von Vorteil, wenn bei mehreren Druckluftaggregaten deren Abluftausgänge über eine Sammelleitung an das Abgassystem gemeinsam angeschlossen sind, wobei diese Sammelleitung bevorzugt wiederum unmittelbar auf den Auspufftopf ausmünden kann.

Die erfindungsgemäße Nutzung des Abgassystems zugleich als Schalldämpfer und Entölvorrichtung für die Druckluftaggregate erweist sich wirtschaftlich als besonders günstig, da so auf zusätzliche und aufwendige gesonderte Schalldämpfer und/oder Entölvorrichtung verzichtet werden kann.

Die Erfindung ist anhand von in der Zeichnung dargestellten Ausführungsbeispielen im folgenden näher beschrieben. Es zeigen:

Figur 1 ein Blockschaltbild einer Druckluftanlage für ein Nutzfahrzeug,

Figur 2 eine schematische Darstellung eines Verbrennungsmotors in der Verbindung mit der Druckluftanlage in Figur 1.

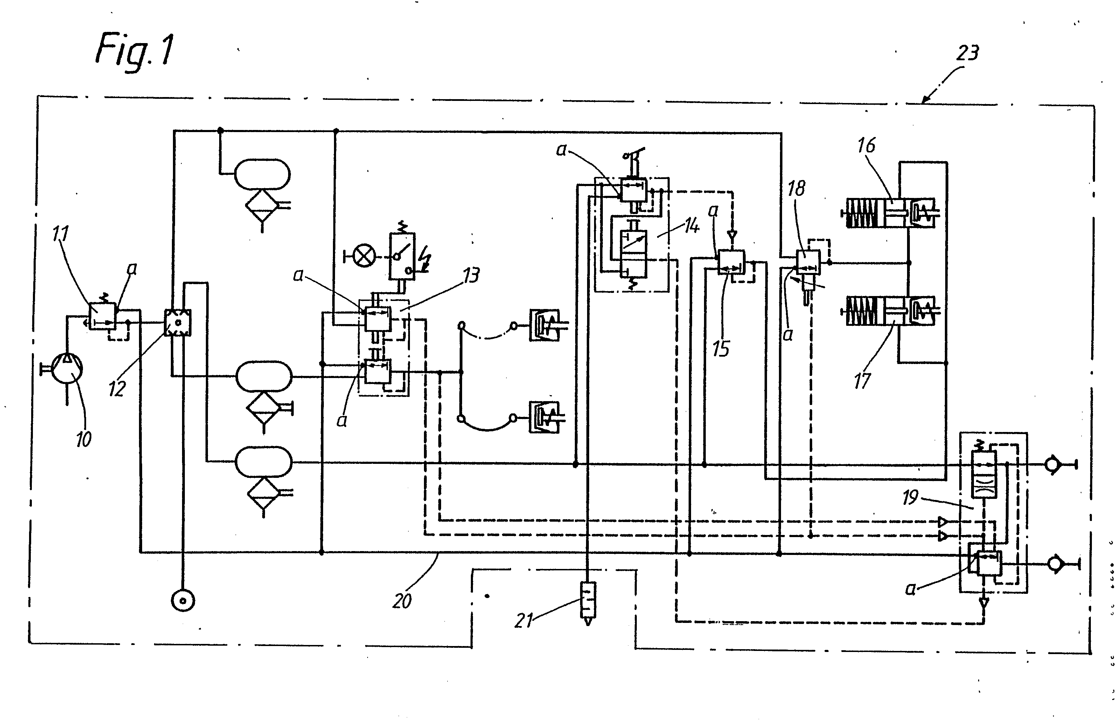

Die in Figur 1 im Schaltbild dargestellte Druckluftanlage 23 für ein Nutzfahrzeug weist eine Mehrzahl von Druckluftaggregaten auf, die jeweils einen der Entlüftung dienenden Abluftausgang besitzen. Solche Druckluftaggregate sind ein einem Verdichter 10 nachgeschalteter Druckregler 11, der ausgangsseitig mit einem Schutzventil 12 verbunden ist, ein Zweikreis-Bremsventil 13 zur Steuerung der Bremszylinder, ein Handbremsventil 14, ein Relaisventil 15 für zwei Federspeicher 16, 17, ein Bremskraftregler-Relais 18 und ein Anhänger-Steuerventil 19. Diese Druckluftaggregate sind in bekannter Weise in der in Figur 1 dargestellten Weise miteinander verbunden.

Die mit a jeweils bezeichneten Abluftausgänge der Druckluftaggregate 11, 13, 14, 15, 18, 19 sind an eine Sammelleitung 20 angeschlossen. Diese Sammelleitung 20 mündet in einem großvolumigen Schalldämpfer 21, in welchem eine Entölvorrichtung, z.B. ein Ölfilter oder Ölabscheider mit Ölsammler integriert ist.

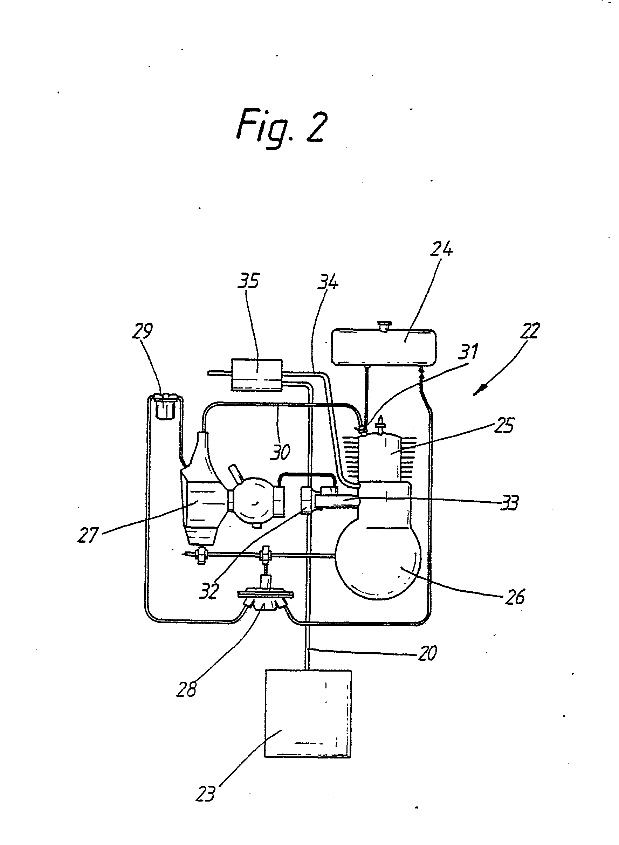

Gebildet ist dieser Schalldämpfer 21 bei einem Nutzfahrzeug, das neben der Druckluftanlage 23 einen Verbrennungsmotor 22 mit nachgeordneten, eine Abgasleitung 34 und einen Auspufftopf 35 umfassenden Abgassystem aufweist, durch den Auspufftopf 35 des Abgassystemes, wie dies in Fig. 2 näher erläutert wird.

Von dem schematisch gezeigten Verbrennungsmotor 22 sind der Krafstoff behälter mit 24, der Motorblock mit 25, das Kurbelgehäuse mit 26 und die Einspritzpumpe mit 27 bezeichnet. Der Kraftstoff wird mittels einer Kraftstoffförderpumpe 28 über ein Kraftstoffilter 29 zu der Einspritzpumpe 27 gefördert. Eine Einspritzleitung 30 führt von dieser zu der Einspritzdüse 31 im Zylinder des Motorblockes 25. Verbrennungsluft wird über eine mit einem Luftfilter 32 abgeschlossene Saugleitung 33 angesaugt, während die Verbrennungsgase über das Abgassystem mit der Abgasleitung 34 und dem Auspufftopf 35 in die Atmosphäre abgeführt werden. Die Sammelleitung 20 der Druckluftanlage 23 ist unmittelbar in den Auspufftopf 35 geführt, wodurch die Abluftvolumina der Druckluftaggregate 11, 13, 14, 15, 18, 19 in Figur 1 weitgehend geräuscharm abgeführt werden können. Zugleich werden in dem heißen Auspufftopf 35 die Ölreste verbrannt.

Bei der beschriebenen Druckluftanlage ist es nicht zwingend, daß alle Druckluftaggregate an die Sammelleitung 20 angeschlossen werden. In vielen Fällen genügt es zu einer ausreichenden Geräuschdämpfung, nur solche Druckluftaggregate anzuschließen, die ein vorgegebenes Mindest-Abluftvolumen entlüften.

**Ansprüche**

1. Druckluftanlage für Nutzfahrzeuge, die über einen Verbrennungsmotor angetrieben sind, dessen Abgassystem einen Auspufftopf umfaßt, und bei denen die Druckluftanlage mindestens ein Druckluftaggregat aufweist, das mit einem der Entlüftung dienenden Abluftausgang versehen ist, und mit Mitteln zur Dämpfung der durch die Abluft verursachten Ausströmgeräusche,

**dadurch gekennzeichnet,**

daß der Abluftausgang (a) des Druckluftaggregates (11,13, 14, 15, 18, 19) auf das Abgassystem - (Abgasleitung 34, Auspufftopf 35) ausmündet, derart daß dessen Auspufftopf (35) Schalldämpfer und Entölvorrichtung für die Abluft bildet.

2. Druckluftanlage nach Anspruch 1,

**dadurch gekennzeichnet,**

daß die Abluftzuführung auf das Abgassystem - (Abgasleitung 34, Auspufftopf 35) dem Auspufftopf (35) zugeordnet ist.

3. Druckluftanlage nach Anspruch 1,

**dadurch gekennzeichnet,**

daß die Abluftausgänge (a) mehrerer Druckluftaggregate (11, 13, 14, 15, 18, 19) über eine Sammelleitung (20) an das Abgassystem (Abgasleitung 34, Auspufftopf 35) angeschlossen sind.

Fig.1

0 206 356

# Fig. 2